# EUROPÄISCHE PATENTSCHRIFT

(11) **EP 3 080 467 B1**
(45) Veröffentlichungstag und Bekanntmachung des Hinweises auf die Patenterteilung: **18.04.2018**
(21) Anmeldenummer: 14821047.9
(22) Anmeldetag: 03.11.2014
(51) Int. Cl.: F16C 33/38, F16C 33/46, F16C 33/44, F16C 19/02, F16C 19/22, F16C 19/06, F16C 19/26

(54) **WÄLZLAGERKÄFIG**
ANTIFRICTION BEARING CAGE
CAGE DE PALIER À ROULEMENT

(30) Priorität: 10.12.2013 DE 102013225339
(43) Veröffentlichungstag der Anmeldung: 19.10.2016
(73) Patentinhaber: Schaeffler Technologies AG & Co. KG, 91074 Herzogenaurach (DE)
(72) Erfinder: PAUSCH, Michael, 97456 Dittelbrunn (DE); HOCK, Tobias, 97421 Schweinfurt (DE)
(86) Internationale Anmeldenummer: PCT/DE2014/200616
(87) Internationale Veröffentlichungsnummer: WO 2015/086007

(56) Entgegenhaltungen:
- EP-A1- 2 623 802
- US-A- 3 744 862
- US-A1- 2008 279 496
- FRIEDRICH K ED - FRIEDRICH (ED) K: "4.4.1. Concept for hybrid composites with good wear resistance", 1. Januar 1993 (1993-01-01), ADVANCES IN COMPOSITE TRIBOLOGY, ELSEVIER, NL, XP008174997, ISBN: 0-444-89079-3 Bd. 8, Seiten 252-254, [gefunden am 2012-11-05] Seite 252 - Seite 254
- Sandhyarani Biswas ET AL: "Erosion Wear Behaviour of Bamboo/Glass Fiber Reinforced Epoxy Based Hybrid Composites", International Journal of Mechanical and Industrial Engineering, 31. Dezember 2012 (2012-12-31), Seiten 2231-6477, XP055170011, Gefunden im Internet: URL:http://www.researchgate.net/profile/Pr ity_Xess/publication/255989433_Erosion_Wea r_Behaviour_of_BambooGlass_Fiber_Reinforce d_Epoxy_Based_Hybrid_Composites/links/5489 6c810cf289302e316e7d.pdf [gefunden am 2015-02-16]

## Beschreibung

### Gebiet der Erfindung

Die Erfindung betrifft einen Wälzlagerkäfig, beispielsweise Kugellagerkäfig, welcher ein Gewebe enthält und insbesondere für die Verwendung in einem Spindellager geeignet ist.

### Hintergrund der Erfindung

Ein Wälzlagerkäfig, welcher Fasern oder ein Gewebe enthält, ist beispielsweise aus der DE 10 2004 058 518 A1 bekannt. Als Fasern, die in dem Wälzlagerkäfig enthalten sein können, sind Baumwollfasern, Glasfasern, Kohlefasern, Aramidfasern und Borfasern genannt. Der Wälzlagerkäfig enthält darüber hinaus ein Additiv zur Verringerung des Reibwerts, beispielsweise einen Festschmierstoff oder ein niederviskoses Öl. Die Herstellung des Wälzlagerkäfigs kann erfolgen, indem ein Gewebe in einem Gemisch aus Epoxidharz und Festschmierstoff getränkt wird und das getränkte Gewebe zu einem röhrenförmigen Prepreg geformt wird. Das Prepreg wird anschließend in einem Temperaturbereich von 120°C bis 180°C gehärtet und in die Form des Wälzlagerkäfigs bearbeitet. Der Wälzlagerkäfig nach der DE 10 2004 058 518 A1 soll insbesondere für industrielle Spindellagerungen und für den medizintechnischen Bereich, insbesondere in der Dentaltechnik, geeignet sein.

Ein weiterer Wälzlagerkäfig, welcher Fasern enthält, ist zum Beispiel aus der DE 10 2009 032 961 A1 bekannt. Dieser Wälzlagerkäfig ist durch Spritzgießen herstellbar und kann verschiedene Faserarten umfassen, wobei neben Glasfasern, Kohlenstofffasern und Aramidfasern auch PTFE-Fasern genannt sind. Eine Einbettung eines Gewebes in den Käfig ist nicht vorgesehen. Bei einem Kunststoffmaterial, in welchem die Fasern verteilt sind, kann es sich beispielsweise um Polyetheretherketon (PEEK), Polyphenylensulfid (PPS), Polyethersulfon (PES) oder Polyetherimid (PEI) handeln.
Aus der DE 10 2006 007 925 A1 ist ein als einreihiges Schrägkugellager ausgebildetes Wälzlager zur Lagerung einer Werkzeugmaschinen-Hauptspindel bekannt. Ein Käfig dieses Wälzlagers ist als Kunststoff- oder Hartgewebekäfig ausgebildet. In beiden Fällen kann der Käfig am äußeren Lagerring des Wälzlagers geführt sein. Aus der EP 2 623 802 A1 ist ein Wälzlagerkäfig nach dem Oberbegriff des unabhängigen Anspruchs 1 bekannt.

### Aufgabe der Erfindung

Der Erfindung liegt die Aufgabe zugrunde, einen ein Gewebe enthaltenden, insbesondere für die Verwendung in einer Spindellagerung, beispielsweise einer Werkzeugmaschine, geeigneten Wälzlagerkäfig gegenüber dem genannten Stand der Technik besonders hinsichtlich Verschleißfestigkeit sowie der Eignung für extreme Einsatzbedingungen weiterzuentwickeln.

### Beschreibung der Erfindung

Diese Aufgabe wird erfindungsgemäß gelöst durch einen Wälzlagerkäfig mit den Merkmalen des Anspruchs 1. Der Wälzlagerkäfig ist als Kugel- oder Rollenlagerkäfig ausgebildet und weist in an sich bekanntem Grundaufbau zwei Seitenringe auf, welche unter Bildung von Käfigtaschen durch eine Anzahl Stege einstückig miteinander verbunden sind, wobei ein durchgehendes Gewebe in der gesamten Anordnung aus Seitenringen und Stegen enthalten ist. Der Wälzlagerkäfig kann als Käfig eines reinen Radiallagers, nämlich Radialkugellagers oder Radialrollenlagers, ebenso wie als Käfig eines Schrägkugellagers ausgebildet sein. Bei den in dem Käfig geführten Wälzkörpern kann es sich um Kugeln oder Zylinderrollen handeln. Es kann eine Außenbordführung, Innenbordführung oder Wälzkörperführung des Käfigs vorgesehen sein.
Erfindungsgemäß ist das Gewebe aus mindestens zwei Typen unterschiedlicher Fasern aufgebaut, wobei sich die verschiedenen Fasern hinsichtlich ihrer Materialzusammensetzung sowie ihrer mechanischen Eigenschaften voneinander unterscheiden.
Während ein erster Typ von Fasern beispielsweise primär hinsichtlich mechanischer Belastbarkeit und Steifigkeit ausgewählt ist, kann ein weiterer im Gewebe enthaltener Typ von Fasern beispielsweise hinsichtlich Schmierungseigenschaften optimiert sein. Hierbei kann entweder die Faser selbst schmierende Eigenschaften aufweisen oder besonders gut Schmierstoff, beispielsweise ein Öl, an sich binden. Die unterschiedlichen Fasern des Gewebes sind in sich voneinander unterscheidender Anordnung im Gewebe enthalten. Hierbei ist ein erster Typ von Fasern überwiegend oder vollständig in Umfangsrichtung des Wälzlagerkäfigs ausgerichtet, während ein zweiter Typ von Fasern zumindest überwiegend in Axialrichtung des Wälzlagers ausgerichtet ist. Hierbei weisen in vorteilhafter Ausgestaltung die hauptsächlich in Umfangsrichtung ausgerichteten Fasern eine höhere Zugfestigkeit als die hauptsächlich in Axialrichtung ausgerichteten Fasern auf. Die spezifische Reißfestigkeit, auch als Reißlänge bezeichnet, ist bei den in Umfangsrichtung liegenden Fasern des Wälzlagerkäfigs vorzugsweise höher als bei den axial ausgerichteten Fasern.
Der Wälzlagerkäfig kann sowohl in Umfangsrichtung als auch in Axialrichtung jeweils entweder eine Sorte Fasern oder mehrere Sorten Fasern enthalten. Beispielsweise sind folgende Kombinationen möglich:
- Das Gewebe enthält genau eine Sorte Fasern in Umfangsrichtung und verschiedenartige Fasern in Axialrichtung.
- Das Gewebe enthält genau eine Sorte Fasern in Axialrichtung und mehrere, verschiedene Fasersorten in Umfangsrichtung.
- Das Gewebe enthält mehrere Fasersorten in Umfangsrichtung und mehrere Fasersorten in Axialrichtung.

Als Fasern zur Herstellung des Gewebes kommen Kunstfasern ebenso wie Naturfasern in Betracht. Hierbei können in ein und derselben Richtung entweder nur Naturfasern, nur Kunstfasern oder sowohl Kunst- als auch Naturfasern verlaufen. Dies gilt sowohl für die in Umfangsrichtung, also in Kettrichtung, verlaufenden Fasern als auch für die in Axialrichtung des Wälzlagerkäfigs, das heißt in Schussrichtung, verlaufenden Fasern.

Gemäß einer möglichen Ausgestaltung handelt es sich bei den in Umfangsrichtung verlaufenden Fasern um Kunstfasern und bei den in Axialrichtung verlaufenden Fasern um Naturfasern. Als Kunstfasern können insbesondere Aramidfasern, Basaltfasern, Borfasern, Glasfasern, Kohlenstofffasern, PET (Polyethylenterephtalat) - Fasern und/oder PTFE (Polytetrafluorethylen) - Fasern im Gewebe des Wälzlagerkäfigs enthalten sein. Für die Herstellung des Gewebes geeignete Naturfasern sind beispielsweise Bambusfasern, Baumwollfasern, Flachsfasern, Hanffasern, Jutefasern, Ramiefasern und Sisalfasern.

Eine mögliche Kombination von Kunstfasern und Naturfasern im Gewebe stellen zum Beispiel die Kombinationen Aramid/Baumwolle und Carbon/Baumwolle dar. Hierbei ist das Gewebe in Umfangsrichtung zu mindestens 20% aus Kunstfaser, das heißt Aramidfasern beziehungsweise Kohlenstofffasern, aufgebaut, während als in Axialrichtung verlaufende Fasern ausschließlich Baumwollfasern verwendet werden. Ebenso bildet Baumwolle den auf 100% fehlenden Anteil der Fasern in Umfangsrichtung, sofern die in Umfangsrichtung verlaufenden Fasern nicht ausschließlich Aramid- beziehungsweise Carbonfasern sind.

Das Gewebe kann in jeglicher Zusammensetzung in eine thermoplastische oder duroplastische Kunststoffmatrix eingebettet sein. Als geeignete Matrixwerkstoffe sind insbesondere Epoxid- und Phenolharz zu nennen. Im Rahmen der Herstellung des Wälzlagerkäfigs kann das Gewebe zunächst im Matrixwerkstoff getränkt und aufgewickelt werden, um einen hülsenförmigen Prepreg zu erhalten, der anschließend weiterverarbeitet wird, wobei die Weiterverarbeitung spanende Bearbeitungsschritte umfasst.

Die in Umfangsrichtung des Wälzlagerkäfigs verlaufenden Fasern des Gewebes weisen in bevorzugter Ausgestaltung im Vergleich zu den in Axialrichtung verlaufenden Fasern nicht nur eine höhere Zugfestigkeit, sondern auch ein höheres Elastizitätsmodul auf. Dagegen ist der Wärmeausdehnungskoeffizient der in Umfangsrichtung verlaufenden Fasern bevorzugt geringer als der Wärmeausdehnungskoeffizient der in Axialrichtung verlaufenden Fasern des Gewebes. Somit führen weder hohe thermische noch mechanische Belastungen, nämlich Fliehkräfte, zu einer starken Aufweitung des Wälzlagerkäfigs. Der Wälzlagerkäfig ist damit selbst bei einem nur geringen Spiel zwischen Käfig und Lageraußenring in einem weiten Temperaturbereich nutzbar.

Die stark richtungsabhängigen Eigenschaften des Gewebes des Wälzlagerkäfigs ermöglichen zudem eine im Vergleich zum Stand der Technik sehr filigrane Käfigkonstruktion. Dies eröffnet nützliche Gestaltungsfreiheiten bei der Konstruktion des gesamten Wälzlagers, beispielsweise hinsichtlich der Anordnung und Querschnittsgestaltung von Dichtelementen.

### Kurze Beschreibung der Zeichnung

Nachfolgend wird ein Ausführungsbeispiel der Erfindung anhand der beigefügten Zeichnungen näher erläutert. Dabei zeigen:
- Figur 1: ein als Schrägkugellager ausgebildetes Spindellager in einer Schnittdarstellung,
- Figur 2: in einer schematischen Darstellung ein im Käfig des Wälzlagers nach Figur 1 enthaltenes Gewebe.

### Ausführliche Beschreibung der Zeichnung

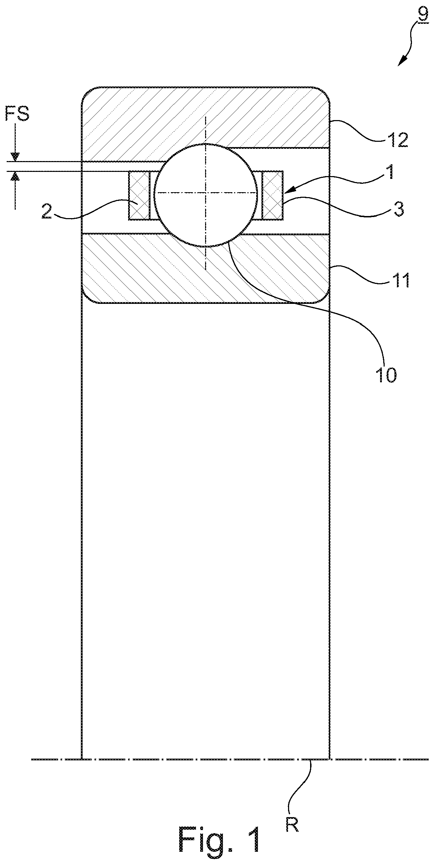

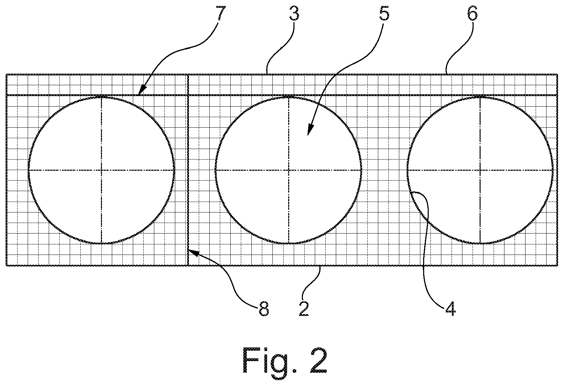

Ein Wälzlagerkäfig 1 ist zur Führung von Wälzkörpern 10, nämlich Kugeln, eines insgesamt mit dem Bezugszeichen 9 gekennzeichneten Wälzlagers, nämlich Kugellagers, vorgesehen. Das Kugellager 9 ist als einreihiges Schrägkugellager ausgebildet und findet als schnelllaufendes Spindellager in einer Werkzeugmaschine Verwendung. Hinsichtlich der prinzipiellen Funktion des Wälzlagers 9 wird auf den eingangs zitierten Stand der Technik, insbesondere auf die DE 10 2006 007 925 A1, verwiesen.
Die Kugeln 10 des Wälzlagers 9 rollen auf Lagerringen 11, 12, nämlich einem Innenring 11 und einem Außenring 12, ab. Die mit der Symmetrieachse des Wälzlagerkäfigs 1 identische Rotationsachse des Kugellagers 9 ist mit R bezeichnet. Bei dem Wälzlagerkäfig 1 handelt es sich um einen außenbordgeführten Käfig, wobei zwischen dem Außenumfang des Wälzlagerkäfigs 1 und dem Innenumfang des Außenrings 12 ein Führungsspiel FS gegeben ist. Alternativ kann der Wälzlagerkäfig 1 in nicht dargestellter Weise auch durch die Wälzkörper 10 oder durch den Innenring 11 geführt, das heißt als wälzkörperbeziehungsweise innenbordgeführter Käfig ausgebildet sein.
Jeder Wälzkörper 10 des Kugellagers 9 ist in einer Käfigtasche 5 des Wälzlagerkäfigs 1 geführt. Die Wandungen der Käfigtaschen 5 können, wie in Figur 1 erkennbar, zylindrisch geformt sein. Alternativ können die Käfigtaschen 5 sphärisch geformte Oberflächen aufweisen. In jedem Fall weist der Wälzlagerkäfig 1 zwei geschlossene Seitenringe 2, 3 auf, zwischen welchen sich unter Bildung der Käfigtaschen 5 Stege 4 erstrecken, die einstückig mit den Seitenringen 2, 3 verbunden sind. Die Stege 4 und Käfigtaschen 5 sind der Übersichtlichkeit halber nur in Figur 2 mit Bezugszeichen versehen, obwohl in dieser Darstellung nur ein Bestandteil des Wälzlagerkäfigs 1 sichtbar ist.

Der Wälzlagerkäfig 1 ist aus einem Gewebe 6 aufgebaut, welches in eine Kunststoffmatrix aus Epoxid- oder Phenolharz eingebunden ist. Das in Figur 2 symbolisiert dargestellte Gewebe 6 ist aus in Kettrichtung, das heißt in Umfangsrichtung des Wälzlagerkäfigs 1, verlaufenden Fasern 7 und aus in Schussrichtung, das heißt in Axialrichtung des Wälzlagerkäfigs 1, verlaufenden Fasern 8 aufgebaut. Die Fasern 7, 8 unterscheiden sich voneinander stark hinsichtlich ihrer Zusammensetzung sowie in ihren mechanischen Eigenschaften, sodass das Gewebe 6 extrem anisotrope Eigenschaften aufweist.

Die in Umfangsrichtung verlaufenden Fasern 7 sind hochfeste Kunstfasern, beispielsweise Kohlenstofffasern, oder ein auf hohe Zugfestigkeit ausgelegtes Gemisch verschiedener Fasern. Beispielsweise handelt es sich bei den in Umfangsrichtung verlaufenden Fasern 7 um eine Zusammensetzung aus zwei oder drei verschiedenartigen Fasern. Die Fasern 7 sind in jedem Fall derart ausgewählt, dass eine Rotation des Wälzlagerkäfigs 1 selbst bei hohen Drehzahlkennwerten des Kugellagers 9 lediglich zu einer geringfügigen Aufweitung des Wälzlagerkäfigs 1 und einer damit einhergehenden Verringerung des Führungsspiels FS führt. Die damit mögliche Auslegung des Kugellagers 9 mit geringem Führungsspiel FS stellt sicher, dass in jedem Drehzahlbereich höchstens geringe Exzentritäten des Wälzlagerkäfigs 1, welche zu Flieh- und Reibkräften führen würden, auftreten können.

Im Vergleich zu den in Tangentialrichtung des Wälzlagerkäfigs 1 wirkenden Kräften ist der Wälzlagerkäfig 1 selbst beim Betrieb mit hohen Drehzahlen nur vergleichsweise geringen Kräften in Axialrichtung ausgesetzt. Dementsprechend sind die in Axialrichtung verlaufenden Fasern 8 des Gewebes 6 nicht primär unter dem Gesichtspunkt der Zugfestigkeit ausgewählt. Vielmehr werden als in Schussrichtung des Gewebes 6 verlaufende Fasern 8 sortenreine oder gemischte Fasern ausgewählt, welche für gute Schmierungseigenschaften des Wälzlagerkäfigs 1 sorgen. Im Ausführungsbeispiel sind dies Baumwollfasern, welche sich durch eine gute Schmierstoffspeicherfähigkeit auszeichnen.

Aufgrund der Kombination der unterschiedlichen Fasern 7, 8 in ein und demselben Gewebe 6 ist der Wälzlagerkäfig 1 im Vergleich zu herkömmlichen Käfigen von Spindellagern wesentlich filigraner bei gleichzeitig erhöhter Belastbarkeit und Lebensdauer gestaltet.

### Bezugszahlenliste

- FS: Führungsspiel
- R: Rotationsachse

- 1: Wälzlagerkäfig
- 2: Seitenring
- 3: Seitenring
- 4: Steg
- 5: Käfigtasche
- 6: Gewebe
- 7: Faser, in Umfangsrichtung verlaufend
- 8: Faser, in Axialrichtung verlaufend
- 9: Kugellager
- 10: Wälzkörper, Kugel
- 11: Innenring
- 12: Außenring

## Patentansprüche

1. Wälzlagerkäfig (1), mit zur Führung von Wälzkörpern (10) vorgesehenen Käfigtaschen (5), welche durch zwei eine gemeinsame Symmetrieachse (R) aufweisende Seitenringe (2, 3) sowie diese verbindende Stege (4) gebildet sind, wobei die Seitenringe (2, 3) mit den Stegen (4) einstückig ausgebildet sind und ein Gewebe (6) enthalten, das aus mindestens zwei Typen unterschiedlicher Fasern (7, 8) aufgebaut ist, **dadurch gekennzeichnet, dass** die verschiedenen Typen von Fasern (7, 8) in sich voneinander unterscheidender Anordnung im Gewebe (6) enthalten sind, wobei ein erster Typ von Fasern (7) überwiegend in Umfangsrichtung der Seitenringe (2, 3) ausgerichtet ist sowie ein zweiter Typ von Fasern (8) überwiegend in Axialrichtung ausgerichtet ist.

2. Wälzlagerkäfig (1) nach Anspruch 1, **dadurch gekennzeichnet, dass** die überwiegend in Umfangsrichtung ausgerichteten Fasern (7) eine höhere Zugfestigkeit als die überwiegend in Axialrichtung ausgerichteten Fasern (8) aufweisen.

3. Wälzlagerkäfig (1) nach Anspruch 2, **dadurch gekennzeichnet, dass** als in Umfangsrichtung ausgerichtete Fasern (7) Kunstfasern und als in Axialrichtung ausgerichtete Fasern (8) Naturfasern vorgesehen sind.

4. Wälzlagerkäfig (1) nach Anspruch 3, **dadurch gekennzeichnet, dass** als in Umfangsrichtung ausgerichtete Fasern (7) mindestens ein Typ von Fasern aus der Gruppe an Fasern, die Aramidfasern, Basaltfasern, Borfasern, Glasfasern, Kohlenstofffasern, PET-Fasern und PTFE-Fasern enthält, vorgesehen ist.

5. Wälzlagerkäfig (1) nach Anspruch 3, **dadurch gekennzeichnet, dass** als in Axialrichtung ausgerichtete Fasern (8) mindestens ein Typ von Fasern aus der Gruppe an Fasern, die Bambusfasern, Baumwollfasern, Flachsfasern, Hanffasern, Jutefasern, Ramiefasern und Sisalfasern enthält, vorgesehen ist.

6. Wälzlagerkäfig (1) nach einem der Ansprüche 2 bis 5, **dadurch gekennzeichnet, dass** in Umfangsrichtung ausgerichtete Fasern (7) einen geringeren Wärmeausdehnungskoeffizienten als in Axialrichtung ausgerichtete Fasern (8) aufweisen.

## Claims

1. Anti-friction bearing cage (1) having cage pockets (5) which are provided for guiding anti-friction elements (10) and which are formed by two lateral rings (2, 3) that have a common symmetry axis (R) and by webs (4) that connect said lateral rings (2, 3), wherein the lateral rings (2, 3) are configured so as to be integral to the webs (4) and contain a woven fabric (6) which is constructed from at least two types of dissimilar fibres (7, 8), **characterized in that** the different types of fibres (7, 8) are contained in the woven fabric (6) in mutually dissimilar arrangements, wherein a first type of fibres (7) is oriented largely in the circumferential direction of the lateral rings (2, 3), and a second type of fibres (8) is oriented largely in the axial direction.

2. Anti-friction bearing cage (1) according to Claim 1, **characterized in that** the fibres (7) that are largely oriented in the circumferential direction have a higher tensile strength than the fibres (8) that are largely oriented in the axial direction.

3. Anti-friction bearing cage (1) according to Claim 2, **characterized in that** man-made fibres are provided as fibres (7) that are oriented in the circumferential direction, and natural fibres are provided as fibres (8 of the victor to give money) that are oriented in the axial direction.

4. Anti-friction bearing cage (1) according to Claim 3, **characterized in that** at least one type of fibres from the group of fibres comprising aramid fibres, basalt fibres, boron fibres, glass fibres, carbon fibres, PET fibres, and PTFE fibres, is provided as fibres (7) that are oriented in the circumferential direction.

5. Anti-friction bearing cage (1) according to Claim 3, **characterized in that** at least one type of fibres from the group of fibres comprising bamboo fibres, cotton fibres, flax fibres, hemp fibres, jute fibres, ramie fibres, and sisal fibres, is provided as fibres (8) that are oriented in the axial direction.

6. Anti-friction bearing cage (1) according to one of Claims 2 to 5, **characterized in that** fibres (7) that are oriented in the circumferential direction have a lower coefficient of thermal expansion than fibres (8) that are oriented in the axial direction.

## Revendications

1. Cage (1) pour palier de roulement présentant des poches (5) de cage prévues pour guider des corps de roulement (10) et formées de deux bagues latérales (2, 3) présentant un axe de symétrie (R) commun ainsi que de traverses (4) qui les relient, les bagues latérales (2, 3) étant formées d'un seul tenant avec les traverses (4) et contenant un tissu (6) constitué d'au moins deux types de fibres différentes (7, 8), **caractérisée en ce que**
les différents types de fibres (7, 8) sont inclus dans le tissu (6) dans des agencements qui se distinguent l'un de l'autre, un premier type de fibres (7) étant orienté principalement dans la direction périphérique des bagues latérales (2, 3) et un deuxième type de fibres (8) étant orienté principalement dans la direction axiale.

2. Cage (1) pour palier de roulement selon la revendication 1, **caractérisée en ce que** les fibres (7) orientées principalement dans la direction périphérique présentent une résistance en traction plus élevée que les fibres (8) orientées principalement dans la direction axiale.

3. Cage (1) pour palier de roulement selon la revendication 2, **caractérisée en ce que** comme fibres (7) orientées principalement dans la direction périphérique sont prévues des fibres synthétiques et comme fibres (8) orientées principalement dans la direction axiale (8) des fibres naturelles.

4. Cage (1) pour palier de roulement selon la revendication 3, **caractérisée en ce que** comme fibres (7) orientées principalement dans la direction périphérique, est prévu au moins un type de fibres sélectionné dans l'ensemble de fibres qui contient les fibres d'aramide, les fibres de basalte, les fibres de bore, les fibres de verre, les fibres de carbone, les fibres de PET et les fibres de PTFE.

5. Cage (1) pour palier de roulement selon la revendication 3, **caractérisée en ce que** comme fibres (8) orientées principalement dans la direction axiale est prévu au moins un type de fibres sélectionné dans l'ensemble de fibres qui contient les fibres de bambou, les fibres de coton, les fibres de lin, les fibres de chanvre, les fibres de jute, les fibres de ramie et les fibres de sisal.

6. Cage (1) pour palier de roulement selon l'une des revendications 2 à 5, **caractérisée en ce que** les fibres (7) orientées principalement dans la direction périphérique présentent un coefficient de dilatation thermique plus bas que les fibres (8) orientées principalement dans la direction axiale.
